# EUROPEAN PATENT APPLICATION

(11) **EP 2 248 649 A1**
(43) Date of publication of application: **10.11.2010**
(21) Application number: 09382065.2
(22) Date of filing: 07.05.2009
(51) Int. Cl.: B29C 45/14

(54) **Flocked article and production method thereof**

(71) Applicant: Industrias Tapla, S.L., 08185 Llissá de Vall (ES)
(72) Inventor: Talavera Barcelo, José, 08185, LLISSÁ DE VALL (ES)
(74) Representative: Covadonga Fernández-Vega Feijoo, Maria

(57) **Abstract**

Of the type that incorporate a base body (4) to a surface covered by a flocked covering element (1-2-3), which is integrated with the base body in the actual moulding operation due to injection of the latter; the invention consists of establishing on the flock (3) on the end without its fibres, that opposite its support (1) of fixing to the injection material (4), an adhesive film (5), covered until the time of its placing in the mould by a disposable protective sheet (6), so that said adhesive film (5) makes it possible to fix the flocked covering element to the internal wall of the mould, achieving a dual effect, on the one hand the fixing of the flocked covering element to the mould, and the consequent immobilization thereof during the injection, and, on the other hand, a thermal isolation for the flock (3) against the temperature of the mould wall, to avoid said flock from suffering damages due to excessive heating.

## Description

### OBJECT OF THE INVENTION

The present invention relates to a flocked article, i.e. to an article provided with a flocked surface, therefore materialized in a plurality flock fibres perpendicular to said surface.

More specifically, the invention relates to a flocked article produced by moulding.

The invention also relates to the method to produce said flocked articles.

The invention is especially applicable in the manufacturing of certain types of pieces intended for the motor vehicle sector, although it is applicable to any other field in which similar features are required.

### BACKGROUND OF THE INVENTION

In the preferred field of practical application of said invention, the motor vehicle sector, there are many pieces or profiles often with forms especially complicated and difficult to flock, such as, for example, the case of profiles designed for windows, which however must be covered with flock for specific technical reasons, specifically in said case to act as window pane cleaning elements, in the lowering and rising movements thereof.

For said purpose, fibres of different materials are used, such as acrylic, polyester, polyamide, fibranne, rayon, etc. which should be applied to certain pieces and profiles mainly composed of ethylene propylene diene M-class rubber (EPDM), respecting the forms and dimensions imposed by the geometries of said pieces.

There are different systems to produce these flocked articles, but all of them have as common denominator the fact that in a first operational phase the pieces are produced generally by moulding or injection, and later the flock is applied to said pieces, i.e. after a first operating phase wherein the pieces in question are obtained by moulding, an additional process is necessary, that of flocking, with the corresponding added costs in labour, time and reductions.

More specifically, for fixing said fibres to the piece or profile to flock, solvent-based resins are used which act as adhesives, and in practice, the application of the flock on the piece to cover is especially complex, since it requires the following operating phases:
Sanding, washing and drying of the surface of the piece to cover.
   Application on the surface of the piece of a solvent-based resin which acts as joining element of the flock.

Final brushing of the assembly to eliminate excess fibres, i.e. the surplus flock.

As has just been stated, this operation is especially complex, considerably limiting the production capacity of flocked pieces and increasing their cost.

### DESCRIPTION OF THE INVENTION

The flocked article that the invention proposes, together with the production method thereof, resolve in fully satisfactory manner the aforementioned problem, in the different aspects commented.

To do this, and in accordance with a first aspect of the present invention, a covering element is provided, specifically a flocked element, suitable to be used in a mould for the injection of the plastic piece, which permits producing the flocked article in a single phase.

To do this, the covering element is constituted by a support, as is conventional, based on any material compatible with the material of which the profile or piece to cover will be composed, normally a polymer such as PVC, propylene, polyolefins, etc., which has been flocked by means of a permanent adhesive that makes it possible to fix on said support the flock fibres in an arrangement appreciably perpendicular thereto, but with the special characteristic that said flock fibres, at their end opposite the support, incorporate a coating of modified acrylic resin that forms a film and which has two functions, on the one side to fix the decorate element to the wall of the mould, ensuring its immobilization, and, on the other, to isolate the flock from the heat of the wall of said mould, thus avoiding it from suffering damages during the injection.

To achieve an optimum fusion with the material injected in the mould, the film that constitutes the support of the flock, in addition to having a composition chemically compatible with the injected material, as has been previously stated, should have a melting point equal to or lower than the maximum temperature that said film will have during its time in the mould.

The invention also relates to the method to produce said flocked articles, a method which consists of preparing the flocked covering element for its subsequent insertion in the mould, using for said flocked element a support compatible with the material that must be injected in the mould to produce the profile or piece concerned, removing the disposable protective film that said element initially incorporates covering the modified acrylic resin from what will be the visible face of the flocked covering element, fixing this decorative element to the corresponding wall of the mould by means of the adhesive, i.e. of said acrylic resin, and finally, after the closure of the mould, the introduction therein of the thermoplastic material constituting the profile or piece to obtain, thus achieving that the decorative element is fixed permanently, by means of the melting of its support to the material constituting the base body of the piece or article.

After this injection and demoulding operation, said layer of resin constituting the means of stabilization will come away easily from said fibres by scraping thereof, achieving an optimum aspect of the product.

### DESCRIPTION OF THE DRAWINGS

To complement the description being made and in order to help towards a better understanding of the characteristics of the invention, in accordance with an example of preferred practical embodiment thereof, a set of drawings is attached wherein, as an integral part of said description, the following has been represented:
- Figure 1.: Shows a schematic sectional representation of a flocked article made in accordance with the object of the present invention.
- Figure 2.: Also shows, according to a schematic sectional representation, the article of the previous figure duly housed inside the corresponding injection mould.

### PREFERRED EMBODIMENT OF THE INVENTION

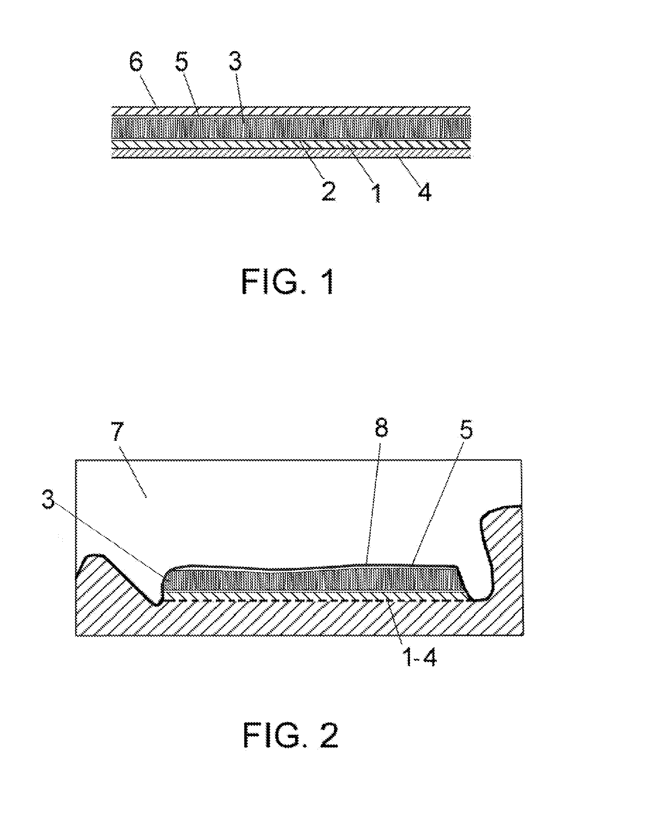

In light of the figures described, in particular figure 1, it can be observed how the flocked article proposed by the invention, as with any other flocked article produced in a single injection operation, is structured from a support (1), which with the collaboration of a film (2) of adhesive resin, receives the fibres (3) constituting the flock solidly joined, said support (1) should be of a nature compatible with the material (6) which must also constitute the base body of the piece or article which, in its injection process will be fixed to the flocked covering element (1-2-3).

Therefore, in accordance now with the invention, said flocked covering element (1-2-3) receives on its side opposite its support (1), i.e. in correspondence with the end without flock fibres (3), an adhesive film (5), specifically a film composed of modified acrylic resin, which will originally be protected by a disposable protector (6).

In accordance with this structuring for the flocked article, inside the mould (7), partially represented in figure 2, the flocked covering element is established, after elimination thereof of the protector (6), so that the adhesive film (5) comes into contact with the internal wall (8) of the mould, and said flocked covering element is consequently fixed to said mould, offering its support towards the hollow interior thereof (1).

After the mounting of the repeatedly mentioned flocked covering element (1-2-3) inside the mould, the thermoplastic resin (4) constituting the profile, piece or article to be produced is injected in this latter, so that during the injection the support (1) and the resin constituting the piece (4) are melted with a single piece character, which entails the flocked covering element being closely joined to the piece to cover, without the flock fibre (3) suffering any type of mobilization during the process, on being fixed to the wall (8) of the mould by the adhesive layer (5), without said flock fibre (3) being affected either by the heat in the mould (7), since it is isolated from said mould (7), specifically from its wall (8) by the adhesive film (5), a film which logically must exercise a fixing force on said mould wall (8) inferior to the fixing power provided by the adhesive (2) between the flock (3) and the support (1), so that it can be easily removed both from the mould (8) and the flock fibres (3), by simple scratching in this last case as said adhesive layer is dry, since its function is no other than avoiding the fibres constituting the flock to displace angularly with respect to its initial position in the moulding process.

## Claims

1. Flocked article, of the type of those that the base body (4) thereof, produced in injected thermoplastic resin or such like, receives solidly joined in the injection phase a flocked covering element provided with a support (1) compatible with the resin (4) and with a layer of flock (3), **characterized in that** said layer of flock (3) incorporates in opposition to its support (1), an adhesive film (5) wherethrough the flock is fixed to the internal wall (8) of the mould (7), said adhesive film (4) acting as thermal barrier that isolates the flock (3) from said internal wall (8) of the mould, in addition to as stabilizing element of the fibres that participate in the layer of flock.

2. Flocked article, according to claim 1, **characterized in that** the adhesive film (5) is initially coated by a protector (6) which can be eliminated immediately before introducing the flocked covering element inside the mould.

3. Flocked article, according to the preceding claims, **characterized in that** the adhesive film (5) consists of a modified acrylic resin.

4. Flocked article, according to the preceding claims, **characterized in that** the adhesive film (5) has a fixing force towards the internal wall (8) of the mould (7), less than the fixing power provided by the layer of adhesive (2) which attaches and also fixes the flock (3) and the support (1).

5. Method to produce the flocked article of the preceding claims, **characterized in that** the following is performed therein:
Preparing a flocked covering element composed of the flock fibres fixed to a permanent support, composed of a material compatible with the material which must constitute the body of the piece or article concerned, covering the end without the fibres constituting the flock by the adhesive film with its corresponding disposable protector or sheet.
Removing the disposable protective film and duly placing the flocked element inside the mould, fixing it to the wall thereof by said adhesive film which tops the flock fibres.
Closing the mould and filling it by injection with the thermoplastic material that will give form to the profile or base body of the article to be produced.
Demoulding and removing the dry layer of adhesive film (5) by scraping.

## Amended claims

### Amended claims in accordance with Rule 137(2) EPC.

**1.** Method for the production of the flocked article **characterized in that** the following is performed therein:
Preparing a flocked covering element composed of the flock fibres (3) fixed to a permanent support (1) composed of a material compatible with the material which must constitute the body of the piece or article concerned, covering the end without the fibres constituting the flock by the adhesive film (5) with its corresponding protector (6) or disposable sheet.
Removing the disposable protective film (6) and duly placing the flocked element (1-2-3) inside the mould (7), fixing it to the wall (7) thereof by said adhesive film (5) which tops the flock fibres.
Closing the mould (7) and filling it by injection with the thermoplastic material that will give form to the profile or base body of the article to be produced.
Demoulding and removing the dry layer of adhesive film (5) by scraping.
